# EUROPEAN PATENT SPECIFICATION

(11) **EP 2 422 124 B1**
(45) Date of publication and mention of the grant of the patent: **29.11.2017**
(21) Application number: 10723287.8
(22) Date of filing: 21.04.2010
(51) Int. Cl.: F16K 35/06

(54) **DRIVING VALVES HAVING KEY BLOCKING MECHANISM**
ANSTEUERVENTILE MIT SCHLÜSSELSPERRMECHANISMUS
SOUPAPES D'ENTRAÎNEMENT COMPRENANT UN MÉCANISME DE BLOCAGE DE CLÉ

(30) Priority: 24.04.2009 IT MI20090701
(43) Date of publication of application: 29.02.2012
(73) Proprietor: FIMCIM S.P.A., 20121 Milano (MI) (IT)
(72) Inventor: CIMBERIO, Renzo, I-20121 Milano (IT)
(74) Representative: Ponzellini, Gianmarco
(86) International application number: PCT/IB2010/000901
(87) International publication number: WO 2010/122410

(56) References cited:
- EP-A- 1 965 006
- WO-A-99/31422
- US-A- 5 182 929

## Description

The invention relates to a drive valve having a key blocking mechanism, especially for use in gas plants of the domestic type.

The prior art comprises installing drive valves for generally opening and closing a gas supply to a dwelling, for example upstream or downstream of the container, before sending the gas on to the heating plant and/or cooking devices.

Also known is the use, in this context, of drive valves having a key blocking mechanism for preventing activation of drive valves by unauthorised persons or in order to enable unblocking of the closed position of the gas delivery only following an express voluntary command (in particular following insertion of the key into the key mechanism).

A valve of this type is known from Italian patent IT1349031. The valve comprises a valve body having a ball obturator and a manually-activated command knob acting on the obturator in order to cause a rotation thereof by 90 degrees. A lock is housed internally of the command knob, which lock has two blocking pins that can be selectively activated in order to realise, respectively, a blocking of the knob in an open position and/or a predetermined closing and an extraction of the group constituted by the command knob and the lock from the valve body.

The two blocking pins are activated by two different keys. One of the blocking pins is active between the knob and an internal body of the valve in order to make the knob rotationally and axially solid with the ball valve. The other blocking pin is active between the knob and an external body of the valve in order to block the rotation of the knob and therefore the ball valve.

The above-described valve exhibits some drawbacks.

Firstly, it does not enable a position of closure of the obturator to be obtained which is not resolvable by the key provided to the user - for example if the user has not paid her or his bills. This condition could be implemented, but with further structural complications.

The valve also enables an extraction position of the group, constituted by the knob and lock, which position does not however seem suitable for realising a blocking condition of the above-described non-user-resolvable type, as following extraction of the handle-lock group the command shaft of the ball valve is exposed and can therefore be activated. So in the above-described non-user-resolvable type, the user could re-open the valve.

Further, the above-described valve exhibits a considerable complexity which is connected to the use of numerous structural parts and furthermore implicates the extraction of the entire group, constituted by the knob and lock, for example in a case of loss of the user key. In this situation the knob and lock have to be replaced.

Document EP 1965006 describes a lock to control a valve. Such valve comprises a stem extending outwardly of a valve body of the valve and rotatable in order to control the valve opening and closing. The lock comprises a drum rotatably fastened to the stem and a rotor in order to be actuated between a closure position and an opening position. Furthermore, the drum comprises a first portion and a second portion that can be reversibly fixed one to the other. The first portion of the drum is adapted to house the rotor and the second portion is adapted to be rotatably fastened to the stem of the valve.

In this context, the technical objective at the base of the present invention is to provide a drive valve having a key blocking mechanism which obviates the drawbacks of the prior art as cited above.

In particular, the aim of the present invention is to provide a drive valve having a key blocking device which exhibits great structural simplicity.

A further aim of the present invention is to provide a drive valve having a key-blocking mechanism that reduces the number of parts to be extracted with respect to the valve body in a case of loss of the user key.

A further aim of the present invention provides a drive valve having a key blocking mechanism which enables realising an effective blocking action (due to non-payment), and in particular enables a non-payment configuration to be set up which the user cannot resolve.

The set technical objective and the set aims are substantially attained by a drive valve having a key blocking mechanism, comprising the technical characteristics set out in one or more of the accompanying claims.

Further characteristics and advantages of the present invention will better emerge from the following nonlimiting description of a preferred but not exclusive realisation of a drive valve having a key blocking mechanism, as illustrated in the accompanying figures of the drawings, in which:

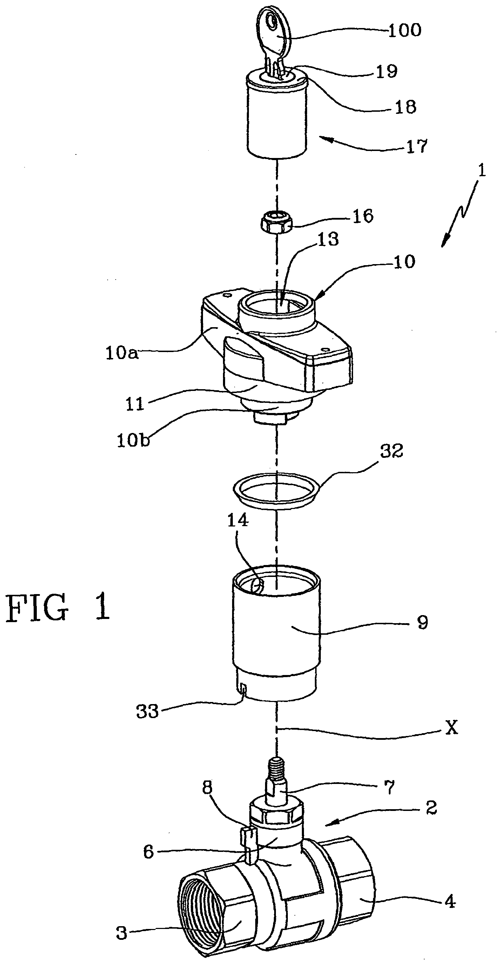

figure 1 is an exploded perspective view of a valve of the present invention;
figure 2 is a plan view of the valve of figure 1 according to a first operating configuration;
figure 3 is a section view of the valve of figure 2 along line III-III of figure 2;
figure 4 is a section view of the valve of figure 1, in a second operating configuration;
figure 5 is a section view of the valve of figure 4 along line V-V of figure 4;
figure 5A is an enlarged view of a portion of the valve of figure 5, showing the selected circle;
figure 6 is a perspective view of the valve of figure 1, in a third operating configuration;
figures 7, 9, 11 are three section views of a part of the valve of figure 1, in three different operating positions;
figures 8, 10, 12 are three section views of the part of the valve shown in figures 7, 9, 11, respectively along lines VIII-VIII of figure 7, X-X of figure 9, and XII-XII of figure 11.

In the figures, 1 denotes in its entirety a valve 1 according to the present invention.

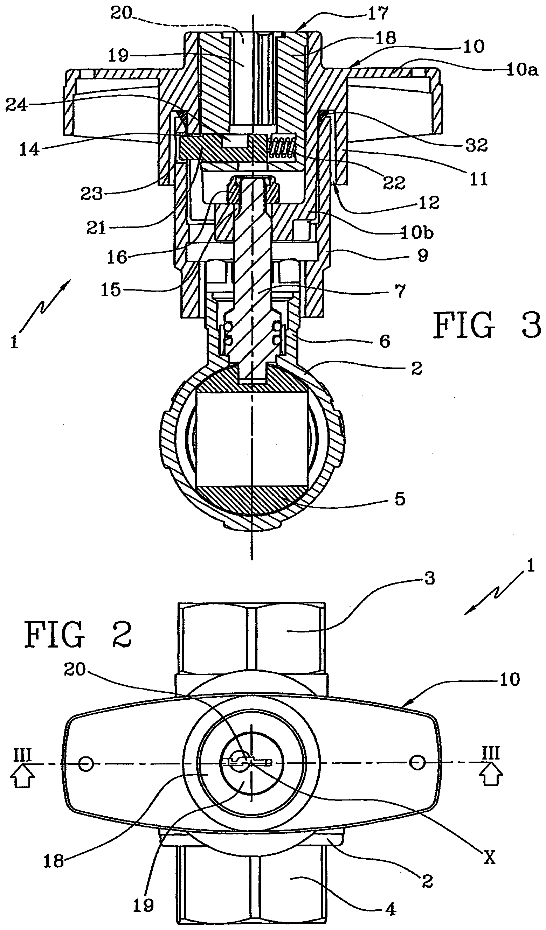

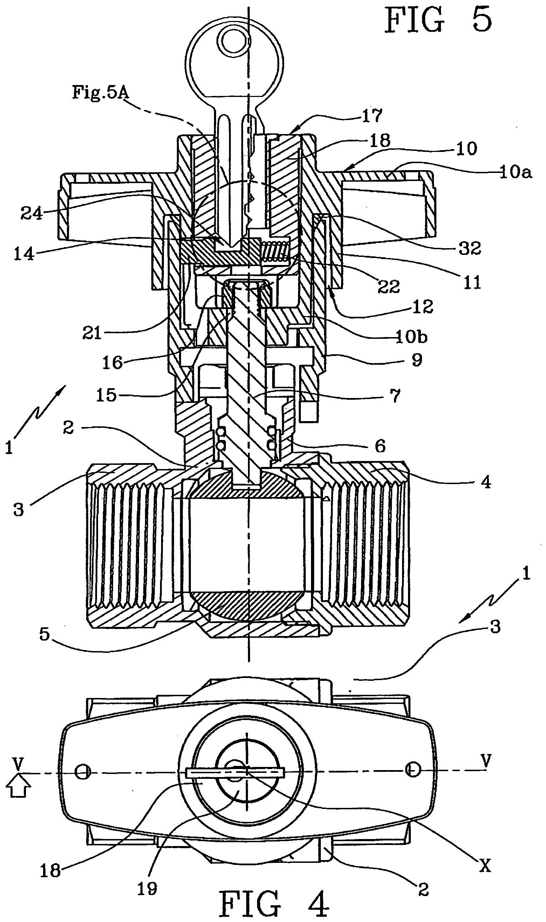

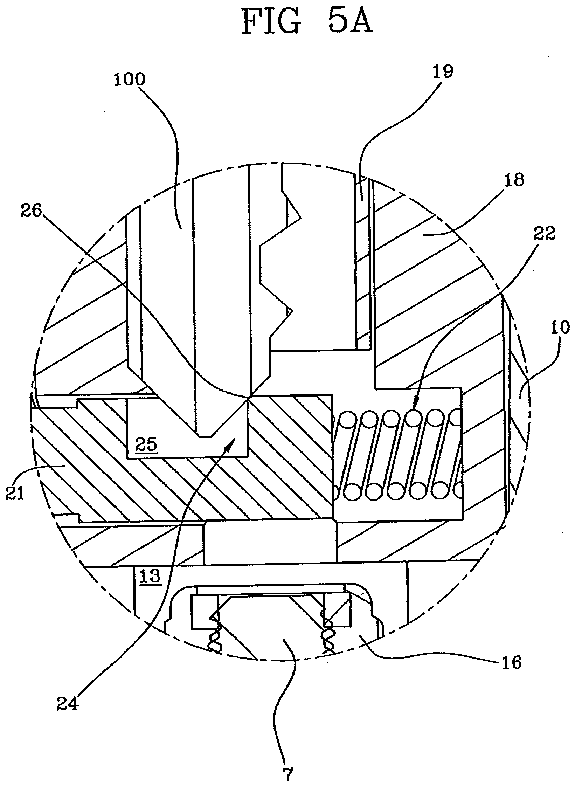

The valve 1 is advantageously used for regulating the combustible gas flow immediately downstream of the meter. Still more advantageously, the valve 1 is used for opening or obstructing passage of gas in domestic piping (cooking stove and over and/or heating plant). The valve 1 comprises a valve body 2 defining an inlet conduit 3 of a gas, and an outlet conduit 4 of the gas. An obturator organ 5 is located between the two conduits 3, 4, which obturator organ 5 is rotatable about an axis X in order to take on an open position (figure 5) in which it sets the conduits 3, 4 in mutual fluid communication, and a closed position (figure 3), in which it interrupts the gas flow between the two conduits 3, 4. The obturator organ 5 is, precisely, a ball obturator of the traditional type.

The valve body 2 exhibits a central protrusion 6 in which a connecting shaft 7 is rotatably housed, which shaft is destined to move the obturator organ 5. The connecting shaft 7 is rotatable coaxially of the obturator organ 5 and is rotatingly solid with the obturator organ 5 via a grooved connection.

The central protrusion 6 of the valve body 2 defines an engaging tooth 8 which is engageable in a corresponding recess 33 of a hollow body 9. The hollow body 9, having a substantially cylindrical external conformation, is arranged on the valve body 2 in a substantially coaxial position to the rotation axis X of the obturator organ 5 and, by way of the coupling with the engaging tooth 8, is rotationally solid with the valve body 2. In other words, the engagement between the engaging tooth 8 and the hollow body 9 prevents the hollow body 9 from making any rotation about the rotation axis X.
a knob 10 for moving the obturator organ 5 is applied on the upper end of the hollow body 9, i.e. on the opposite end thereof to the valve body 2. The knob 10 exhibits a gripping portion 10a, defining two diametrically opposite wings for facilitating gripping thereof by a user, and a coupling flange 10b which is destined to be arranged internally of the hollow body 9.

The gripping portion 10a further comprises an annular jacket 11 external of the coupling flange 10b and which defines, in cooperation with the coupling flange 10b, an annular seating 12. The annular seating 12 is destined to house the upper portion of the hollow body 9, for example by means of interposing of an elastic ring 32.

The knob 10 internally exhibits a cavity 13 which is optionally cylindrical and which extends from the gripping portion 10a to the coupling flange 10b. Further, the cavity 13 advantageously develops about the rotation axis X.

The coupling flange 10b of the grip 10 further exhibits a lateral opening 14 and a bottom opening 15. The lateral opening 14 defines a through-hole which sets the cavity 13 in communication with the annular seating 12. The bottom opening 15 enables insertion of the connecting shaft 7 such that a threaded end portion thereof extends internally of the cavity 13.

A threaded nut 16 is screwed on the threaded end portion of the connecting shaft 7, screwing home internally of the cavity 13 and determining a locking of the knob against the valve body 2.

In the figures, the threaded nut 16 presses the knob 10 towards the valve body 2 and as the hollow body 9 is interposed between the knob 10 and the valve body 2, the tightening of the threaded nut 16 determines a stable coupling between the knob 10, the hollow body 9 and the valve body 2 (though enabling rotation of the knob 10 about the axis X).

The valve 1 advantageously comprises a key lock 17 inserted in the cavity 13 of the knob. The key lock 17 comprises an external body 18 (or jacket) and an internal body 19 (or barrel) rotatably inserted in the external body 18. The internal body 19 exhibits a slit 20 for insertion of a key.

The lock is advantageously destined to perform the following functions:
enabling or unblocking the rotation of the knob 10 about the axis X by use of a first key 100, or user key;
enabling or unblocking the rotation of the knob 10 about the axis X by use of a second key 200 or operator key (or cut-off key due to non-payment of a bill), which by causing the lock to take on a particular configuration can make the user key 100 useless;
enabling removal of the internal body 19 from the external body 18 by the use of the operator key 200, or alternatively
enabling the removal of the internal body 19 from the external body only with third administrator key (not shown, and being a third key that is different to the other two).

In greater detail, the external body 18 of the key lock 17 has a dimension, measured along the axis X, which is larger than the corresponding dimension of the internal body 19. This enables the external body 18 to house, in the lower portion thereof, a bolt 21 which is slidable along a horizontal direction, i.e. perpendicular to the axis X.

The housing and the guide of the bolt 21 are obtained by special seatings fashioned in the external body 18 of the key lock 17.

In its sliding motion, the bolt 21 extends partially from the external body 18 of the lock 17 and is subjected to the action of a contrast spring 22 which tends to maintain the bolt 21 in a partially extracted position.

The lateral opening 14 of the coupling flange 10b of the knob 10 is arranged in such a position as to be aligned with the bolt 21 when the key lock 17 is inserted in the cavity 13 of the knob 10. In this situation, the bolt 21 can engage the lateral opening 14 of the coupling flange 10b.

The bolt 21 is rotationally solid, in a rotation about the axis X, with the external body 18 of the key lock 17.

Further, the external body 18 of the key lock 17 is rotationally solid, in a rotation about the axis X, with the knob 10. In particular, the external body 18 of the key lock 17 is stably inserted in the cavity 13 by means of a grooved profile, or, in any case, has a non-circular transversal section.

For these reasons, the bolt is always rotationally solid with the knob 10, with respect to a rotation about the axis X, and can thus only translate with respect to the knob 10, in particular along the direction which is perpendicular to the axis X.

As is visible in figure 3, the hollow body 9 exhibits at least a seating 23 (for example a through-hole) for housing a terminal portion of the bolt 21.

The seating 23 of the hollow body 9 is arranged in such a position as to be aligned with the bolt 21 in the assembled configuration of the valve 1, such that the bolt 21 can, in its extracting motion from the external body 18 of the lock 17, engage in the seating 23 of the hollow body 9. In this configuration (figure 3), the rotation of the knob 10 about the axis X is prevented.

The seating 23 of the hollow body 9 is further angularly arranged about the axis X in such a position as to block any rotation of the knob 10 in a position corresponding to the opening or the closing of the obturator organ 5. In particular, the hollow body 9 exhibits the seating at the closed position of the valve.

Alternatively the hollow body 9 might have two seatings 23 (configuration not illustrated in the accompanying figures) angularly spaced about the axis X by an angle (in particular 90 degrees) that is such as to realise a blocking of the knob in two different corresponding positions, respectively the opening and the closing positions of the obturator organ 5.

With the aim of unblocking the rotation of the knob 10, the bolt 21 must be retracted up until it disengages from the seating 23 of the hollow body 9. This is obtained by means of the use of the user key 100 (figure 5). In detail, the bolt 21 exhibits an engaging portion 24 facing towards the internal body 19 of the key lock 17 and engageable with a wedge-shaped terminal portion of a key inserted in the lock 17. In particular, the engaging portion 24 of the bolt 21 is conformed such as to engage with the wedge-shaped terminal portion of the key by means of inclined planes, such that by pushing the key internally of the lock 17 a retraction of the bolt 21 against the action of the contrast spring 22 will be determined. In particular, the engaging portion 24 exhibits an undercut 25 destined to house part of the point of the key, and it can exhibit an inclined surface 26 restingly engageable to the wedge-shaped portion of the key (figure 5A). The inclined surface 26 is inclined both with respect to the axis X and with respect to the translation direction of the bolt 21, to translate an insertion movement of the key into the lock 17 into a translation movement of the bolt 21.

Once the bolt 21 is retracted by a run which is sufficient to disengage the bolt 21 from the seating 23 of the hollow body 9, the knob 10 is newly free to rotate about the axis X (figure 5).

The above-described unblocking operation is realised by means of the user key 100. In other words, the user is exclusively enabled to unblock the valve 1 of her or his own plant, since only the person in possession of the key to the lock 17 can unblock the valve 1.

It can happen that the gas distributing corporation (or the administrator of the apartment block management association) decides to temporarily block the gas supply (for example in a case of non-payment of a bill). For this purpose, the operator authorised by the corporation has a second key (operator key) 200 which is enabled to unblock the internal body 19 of the lock 17 in order to enable rotation of the internal body 19 between a first position (of the above-illustrated type) in which the lock is manoeuvrable by the user key 100 to unblock the knob 10, and a second position, rotated with respect to the first position, and in which unblocking of the knob 10 by the user key 100 is inhibited.

In detail, a rotation of the internal body 19 of the lock 17 by a sufficient angle (for example 90 degrees) about the axis X results in the user key 100 no longer being able to act on the engaging portion 24 of the bolt 21 on the principle of the inclined planes. Thus, in this position the user is no longer able to unblock the knob 10 with the user key 100 until the gas corporation operator returns the internal body 19 of the lock 17 (by use of the operator key 200) into the initial position.

In order to realise the blocking by means of the operator key 200, only the operator key 200 (but not the user key 100) must be able to unblock the internal body 19 of the lock 17. For this reason, the lock 17 exhibits special blocking means acting between the internal body 19 and the external body 18 in order to render the two bodies 18, 19 solidly constrained to one another, in the illustrated example, though not exclusively, both in rotation and in extraction (axial direction).

The key lock 17 is advantageously a tumbler lock which tumblers define the blocking means.

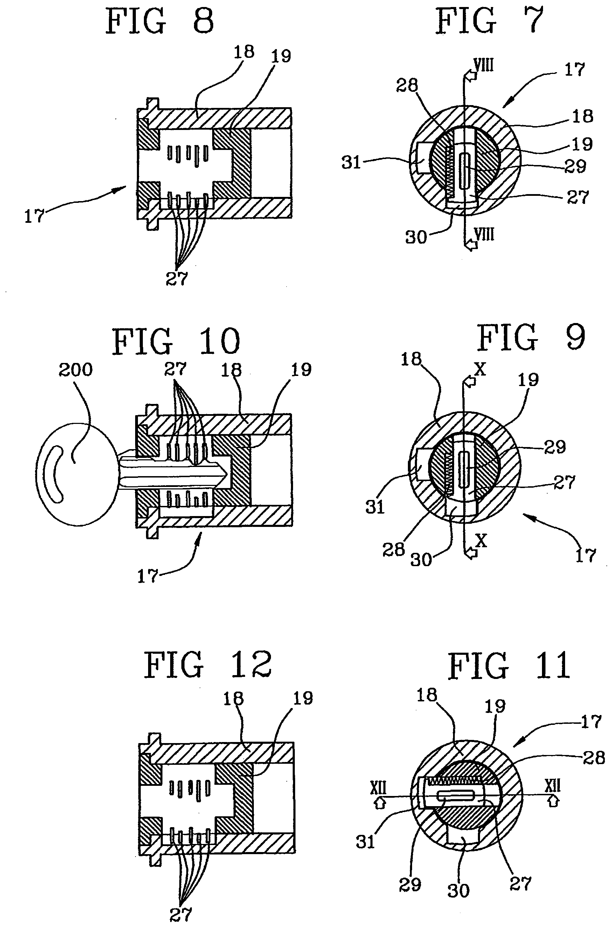

The lock 17 and its functioning is illustrated in figures 7 to 12. In particular, the lock 17 comprises at least a tumbler, and in particular a plurality of tumblers 27, arranged in succession and transversally of the rotation axis of the internal body 19 with respect to the tumbler body and the blades of the lock 17 external 18.

The tumblers 27 are normally pushed into the extract position by means of respective thrust springs 28. Each tumbler 27 exhibits a central opening 29 and the central openings 29 of the tumblers 27 are arranged in different positions such that only a key having a profile that corresponds to the sequence of tumblers 27 is able to unblock all the tumblers 27 and enable unblocking of the internal body 19.

The operator key 200 is advantageously able to unblock at least the tumblers 27 which enable the lock to be brought into the user-blocked or "unpaid bill" position and be blocked in the absence of the operator key; the user key 100 is insertable in the slit 20 of the lock 17, but has a different profile to that of the operator key 200 and is not able to unblock all the tumblers 27 and in particular it cannot unblock the tumbler or tumblers which prevent the lock from being brought from the user-blocked position into the use position.

The tumblers 27 are insertable, by action of the respective springs 28, in a first and a second groove 30, 31, realised on the internal surface of the external body 18. The grooves 30, 31 are angularly distanced from one another, for example by an angle of 90 degrees, in order to realise the blocking of the internal body 19 in a position which is suitable for preventing interaction between the engaging portion 24 of the bolt 21 and the wedge-shaped terminal portion of the key inserted in the lock 17. Figures from 7 to 12 respectively illustrate the passage from a first blocking position (figures 7 and 8) in which, for example, an unblocking of the bolt 21 is enabled by means of the user key, to a second position, rotated by 90 degrees (figures 11 and 12) in which the user key is prohibited from unblocking the bolt 21.

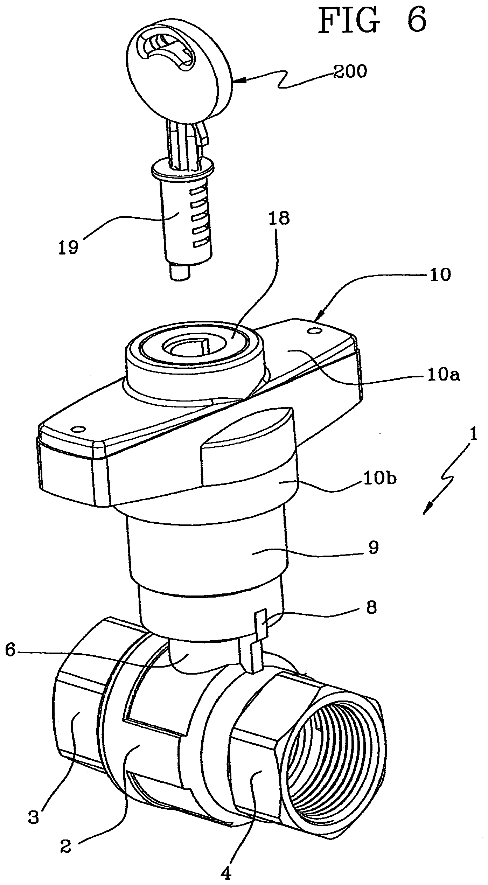

In the intermediate configuration shown in figures 9 and 10, in which the tumblers 27 are disengaged by action of the operator key 200, there is advantageously no active blocking means between the external body 18 and the internal body 19, and consequently the internal body 19 can be extracted, giving the configuration illustrated in figure 6. Thus it is possible to replace the internal body 19 alone of the lock 17 in a case, for example, in which the user key has been lost. In this case it is sufficient that the operator provided with the operator key opens the lock and unblocks the tumblers 27 and realises a raising movement of the internal body 19, extracting it from the external body 18.

An alternative embodiment (not illustrated) exhibits the absence of a third key, an "administrator's" key.

In this embodiment the operator key 200 can bring the lock into the blocked operator position or not, but a further tumbler (or equivalent axial blocking means) prevents extraction of the internal body 19 (leaving it free to rotate).

Only an administrator's key can unblock also the further tumbler, enabling extraction of the internal body 19.

This key, according to needs, can (or might not) also perform all the functions of the user key and the operator key.

The above-described valve 1 thus enables the user exclusively to activate the opening and closing of the gas supply to the plant, with the guarantee (given by the lock) that any attempts at intervention by unauthorised third parties will not in any way alter the state of the plant.

Further, the gas supplier corporation (or other subject such as an administrator) is guaranteed the possibility of suspending supply by closing the valve, with the further guarantee that nobody (including the user) is enabled to modify the closed state imposed by the corporation.

Finally, the barrel of the lock (and the respective key) can be simply and economically replaced should the key be lost, by a simple and rapid intervention by an operator (with the operator key or the administrator's key according to the particular case) .

The present invention attains the set aims, obviating the drawbacks noted in the prior art.

As mentioned herein above, the number of parts to be extracted should the user key be lost is limited to only the central barrel of the lock.

Further, the valve of the invention exhibits a constructional simplicity, requiring only the application of a lock to the knob and the use of a hollow body to be associated to the valve body in order to define a support element to which the knob can be anchored in the blocking position.

The particular structure of the lock further enables a cessation of supply both by the user (according to the specific requirements of the user her or himself) and by the supplier corporation (for example in a case of unpaid bills).

## Claims

1. A driving valve having a key blocking mechanism, comprising:
a valve body (2) defining a passage conduit for a fluid;
an obturator organ (5) arranged internally of the conduit and rotatingly mobile between an open position thereof in which it allows a flow of the fluid into the conduit and a closed position thereof, rotated with respect to the open position, in which it interrupts the flow of the fluid in the conduit;
a command knob (10) having a manual activation, rotatably associated to the valve body (2) and acting on the obturator organ (5) in order to switch the actuator organ between the open position and the closed position;
a key lock (17), mounted on the knob (10) and equipped with first blocking means (21, 22) acting on the knob (10) in order to block the rotation of the knob (10) with respect to the valve body (2) in at least a position corresponding to a position of the open and closed positions of the obturator organ (5),
the first blocking means (21, 22) being releasable by activation of a first key (100) inserted in the lock (17); the lock (17) exhibiting an external body (18) which is stably inserted in the knob (10) and an internal body (19) which is inserted in the external body (18) and has a slit (20) for insertion of a key (100, 200), the internal body (19) exhibiting second blocking means (27) acting between the external body (18) and the internal body (19) of the lock (17) for stably retaining the internal body (19) in the external body (18),
**characterised in that** the second blocking means (27) are releasable by activation of a second key (200), different from the first key (100), which second key (200) is inserted in the slit (20) in order to enable extraction of the internal body (19) from the external body (18).

2. The valve of claim 1, wherein the lock (17) is a tumbler lock and wherein at least a tumbler of the tumblers (27) of the lock (17) defines the second blocking means (27).

3. The valve of claim 1 or 2, wherein the internal body (19) of the lock (17) is rotatably housed in the external body (18) at least between a first stable position in which it enables manoeuvring of the first blocking means (21, 22) by means of the first key (100), and a second position in which the manoeuvring of the first blocking means (21, 22) is prevented, the second blocking means (27) being destined to stably maintain the internal body (19) of the lock (17) in the first and second positions, in particular with the key extracted.

4. The valve of any one of the preceding claims, wherein the valve (1) comprises a support element (9) applied to the valve body (2) and rotationally solid to the valve body (2), and wherein the first blocking means (21, 22) comprise a retractable bolt (21) acting between the knob (10) and the support element (9) and commanded at least by the first key (100) inserted in the lock (17) in order to block and release rotation of the knob (10) about the rotation axis (X) thereof.

5. The valve of claim 4, wherein the first blocking means (21, 22) further comprise a contrast element (22) acting on the bolt (21) in order to maintain the bolt (21) in a partially extracted position from the knob (10) in order to intercept the support element (9) and block the rotation of the knob (10), and wherein the bolt (21) exhibits an engaging portion (24) destined to interact with a wedge-shaped end of the first key (100) inserted in the lock (17) in order to receive a thrust which is opposite a thrust action of the contrast means (22) following insertion of at least the first key (100) in the lock (17).

6. The valve of claims 3 to 5, wherein when the internal body (19) of the lock (17) is in the second position, the bolt (21) and the internal body (19) of the lock (17) are in a reciprocal configuration such as to prevent the interaction between the wedge-shaped end portion of the first key (100) inserted in the lock (17) and the engaging portion (24) of the bolt (21), in order to exert a thrust on the bolt (21) which thrust opposes the thrust action of the contrast means (22).

7. The valve of any one of claims from 4 to 6, wherein the knob (10) exhibits a through-opening (14) in which the bolt (21) is slidable, and wherein the support element (9) exhibits at least a seating (23) for inserting a portion of the bolt (21) in order to block the rotation of the knob (10), the at least a seating (23) of the support element (9) being arranged in such a position as to block the knob (10) in a position corresponding to at least a position of the open and closed positions of the obturator organ (5) .

8. The valve of any one of claims from 4 to 7, wherein the support element (9) comprises a hollow body (9) arranged on the valve body (2) about the rotation axis (X) of the knob (10) and blocked to the valve body (2) in rotation about the axis (X), the hollow body (9) exhibiting a first end which is keyed on a receiving portion (8) of the valve body (2) and a second end which is located in a resting position against a portion of the knob (10) such that the knob (10) maintains the hollow body (9) packed against the valve body (2).

9. The valve of any one of the preceding claims, further comprising a connecting shaft (7) interposed between the knob (10) and the obturator organ (5) and rotationally solid with the knob (10) and the obturator organ (5) in order to give the obturator organ (5) a rotating motion between the open and closed positions following a manoeuvring of the knob (10), and fastening means (16) acting between the connecting shaft (7) and the knob (10) for maintaining the knob (10) stably coupled to the connecting shaft (7), the fastening means (16) in particular comprising a threaded element (16) screwed on a threaded terminal portion of the connecting shaft (7) and destined to maintain the knob (10) pressed towards the valve body (2).

10. The valve of any one of the preceding claims, wherein the lock (17) is activatable by a user key (100) enabled to unblock the first blocking means (21, 22) but not enabled to unblock the second blocking means (27), and by an operator key (200) enabled to unblock the first and the second blocking means (21, 22; 27) and enabled to block the second blocking means (27) in a configuration such as to make the user key (100) unable to unblock the first blocking means (21, 22).

11. The valve of any one of the preceding claims, wherein the second blocking means (27) comprise at least a retractable tumbler configured in a position such as to prevent an extraction of the internal body (19) from the external body (18) when a key is not inserted in the lock (17), the retractable tumbler being configured in an unconstrained position in which the at least a retractable tumbler does not prevent extraction of the internal body (19) from the external body (19) when the operator key (200) is inserted, or when a administrator's key is inserted.

12. The valve of any one of the preceding claims, wherein the second blocking means (27) comprise at least a mobile tumbler that is configurable at least in a first operating position in which it enables a movement between the open position and the closed position of the obturator organ (5), and at least a second operating position in which it does not enable movement of the command knob (10) with the obturator in the closed position, in particular the at least a mobile tumbler being displaceable from the first position to the second operating position and/or vice versa, by means of the operator key (200) or by means of an administrator's key.

13. The valve of claims 11 and 12, wherein the at least a retractable tumbler configured for preventing extraction of the internal body (19) from the external body (18) and the at least a mobile tumbler are a same tumbler.

14. The valve of claims 11 and 12, wherein the at least a retractable tumbler and the at least a mobile tumbler of the blocking means are not a same tumbler.

## Patentansprüche

1. Ansteuerungsventil mit einem Schlüsselsperrmechanismus, umfassend:
einen Ventilkörper (2), welcher eine Durchgangsleitung für ein Fluid definiert;
ein Verschlussorgan (5), welches im Inneren der Leitung angeordnet ist und drehbar zwischen einer offenen Position davon, in welcher es einen Strom des Fluides in die Leitung zulässt, und einer in Bezug auf die offene Position gedrehte geschlossenen Position davon beweglich ist, in welcher es den Strom des Fluides in der Leitung unterbricht;
einen Befehlsknopf (10) mit einer manuellen Betätigung, welcher dem Ventilkörper (2) drehbar zugeordnet ist und auf das Verschlussorgan (5) wirkt, um das Verschlussorgan zwischen der offenen Position und der geschlossenen Position zu schalten;
ein Schlüsselschloss (17), welches an dem Knopf (10) montiert ist und mit ersten Sperrmitteln (21, 22) ausgerüstet ist, welche auf den Knopf (10) wirken, um die Drehung des Knopfes (10) in Bezug auf den Ventilkörper (2) in wenigstens einer Position zu sperren, welche einer Position der offenen und der geschlossenen Position des Verschlussorgans (5) entspricht, wobei die ersten Sperrmittel (21, 22) durch eine Betätigung eines in das Schloss (17) eingeführten ersten Schlüssels (100) lösbar sind; wobei das Schloss (17) einen äußeren Körper (18), welcher fest in den Knopf (10) eingefügt ist, und einen inneren Körper (19) aufweist, welcher in den äußeren Körper (18) eingefügt ist und einen Schlitz (20) zum Einführen eines Schlüssels (100, 200) aufweist, wobei der innere Körper (19) zweite Sperrmittel (27) aufweist, welche zwischen dem äußeren Körper (18) und dem inneren Körper (19) des Schlosses (17) wirken, um den inneren Körper (19) fest in dem äußeren Körper (18) zu halten,
**dadurch gekennzeichnet, dass** die zweiten Sperrmittel (27) durch eine Betätigung eines zweiten Schlüssels (200) lösbar sind, welcher sich von dem ersten Schlüssel (100) unterscheidet, welcher zweite Schlüssel (200) in den Schlitz (20) eingeführt wird, um ein Herausziehen des inneren Körpers (19) aus dem äußeren Körper (18) zu ermöglichen.

2. Ventil nach Anspruch 1, wobei das Schloss (17) ein Zuhaltungsschloss ist und wobei wenigstens eine Zuhaltung der Zuhaltungen (27) des Schlosses (17) die zweiten Sperrmittel (27) definiert.

3. Ventil nach Anspruch 1 oder 2, wobei der innere Körper (19) des Schlosses (17) wenigstens zwischen einer ersten festen Position, in welcher ein Bewegen der ersten Sperrmittel (21, 22) mittels des ersten Schlüssels (100) ermöglicht ist, und einer zweiten Position, in welcher das Bewegen der ersten Sperrmittel (21, 22) verhindert ist, drehbar in dem äußeren Körper (18) aufgenommen ist, wobei die zweiten Sperrmittel (27) vorgesehen sind, um den inneren Körper (19) des Schlosses (17), insbesondere wenn der Schlüssel herausgezogen ist, fest in der ersten und der zweiten Position zu halten.

4. Ventil nach einem der vorhergehenden Ansprüche, wobei das Ventil (1) ein Halterungselement (9) umfasst, welches an dem Ventilkörper (2) bereitgestellt ist und zu dem Ventilkörper (2) rotationsmäßig fest ist, und wobei die ersten Sperrmittel (21, 22) einen einziehbaren Stift (21) umfassen, welcher zwischen dem Knopf (10) und dem Halterungselement (9) wirkt und wenigstens durch den in das Schloss (17) eingeführten ersten Schlüssel (100) betätigt wird, um eine Drehung des Knopfes (10) um die Drehachse (X) davon zu sperren und freizugeben.

5. Ventil nach Anspruch 4, wobei die ersten Sperrmittel (21, 22) ferner ein Gegenelement (22) umfassen, welches auf den Stift (21) wirkt, um den Stift (21) in einer teilweise aus dem Knopf (10) herausgezogenen Position zu halten, um das Halterungselement (9) zu unterbrechen und die Drehung des Knopfes (10) zu sperren, und wobei der Stift (21) einen Eingriffsabschnitt (24) aufweist, welcher vorgesehen ist, um mit einem keilförmigen Ende des in das Schloss (17) eingeführten ersten Schlüssels (100) zusammenzuwirken, um eine einem Einführen wenigstens des ersten Schlüssels (100) in das Schloss (17) folgende, einer Schubwirkung des Gegenmittels (22) entgegengesetzte Schubkraft aufzunehmen.

6. Ventil nach den Ansprüchen 3 bis 5, wobei sich, wenn sich der innere Körper (19) des Schlosses (17) in der zweiten Position befindet, der Stift (21) und der innere Körper (19) des Schlosses (17) in einer wechselseitigen Konfiguration befinden, sodass das Zusammenwirken zwischen dem keilförmigen Endabschnitt des in das Schloss (17) eingeführten ersten Schlüssels (100) und dem Eingriffsabschnitt (24) des Stiftes (21) verhindert wird, um eine Schubkraft auf den Stift (21) auszuüben, welche Schubkraft der Schubwirkung des Gegenmittels (22) entgegengesetzt ist.

7. Ventil nach einem der Ansprüche 4 bis 6, wobei der Knopf (10) eine Durchgangsöffnung (14) aufweist, in welcher der Stift (21) verschiebbar ist, und wobei das Halterungselement (9) wenigstens eine Aufnahme (23) zum Einführen eines Abschnitts des Stiftes (21) aufweist, um die Drehung des Knopfes (10) zu sperren, wobei die wenigstens eine Aufnahme (23) des Halterungselements (9) in einer derartigen Position angeordnet ist, dass der Knopf (10) in einer Position gesperrt wird, welche wenigstens einer Position der offenen und der geschlossen Position des Verschlussorgans (5) entspricht.

8. Ventil nach einem der Ansprüche 4 bis 7, wobei das Halterungselement (9) einen hohlen Körper (9) umfasst, welcher an dem Ventilkörper (2) um die Drehachse (X) des Knopfes (10) herum angeordnet ist und an dem Ventilkörper (2) in einer Drehung um die Achse (X) gesperrt ist, wobei der hohle Körper (9) ein erstes Ende, welches an einem aufnehmenden Abschnitt (8) des Ventilkörpers (2) verkeilt ist, und ein zweites Ende aufweist, welches in einer gegen einen Abschnitt des Knopfes (10) anliegenden Position angeordnet ist, sodass der Knopf (10) den hohlen Körper (9) an dem Ventilkörper (2) gepackt hält.

9. Ventil nach einem der vorhergehenden Ansprüche, ferner umfassend einen Verbindungsschaft (7), welcher zwischen dem Knopf (10) und dem Verschlussorgan (5) eingefügt ist und mit dem Knopf (10) und dem Verschlussorgan (5) rotationsmäßig fest ist, um dem Verschlussorgan (5) einem Bewegen des Knopfes (10) folgend eine Drehbewegung zwischen der offenen und der geschlossen Position zu geben, und Befestigungsmittel (16), welche zwischen dem Verbindungsschaft (7) und dem Knopf (10) wirken, um den Knopf (10) fest mit dem Verbindungsschaft (7) gekoppelt zu halten, wobei die Befestigungsmittel (16) insbesondere ein Gewindeelement (16) umfassen, welches auf einen Gewindeendabschnitt des Verbindungsschaftes (7) geschraubt ist und vorgesehen ist, um den Knopf (10) in Richtung des Ventilkörpers (2) gedrückt zu halten.

10. Ventil nach einem der vorhergehenden Ansprüche, wobei das Schloss (17) durch einen Benutzerschlüssel (100), welcher dazu in der Lage ist, die ersten Sperrmittel (21, 22) zu entsperren, aber nicht dazu in der Lage ist, die zweiten Sperrmittel (27) zu entsperren, und durch einen Betreiberschlüssel (200) betätigbar ist, welcher dazu in der Lage ist, die ersten und die zweiten Sperrmittel (21, 22; 27) zu entsperren, und dazu in der Lage ist, die zweiten Sperrmittel (27) in einer derartigen Konfiguration zu sperren, dass der Benutzerschlüssel (100) daran gehindert wird, die ersten Sperrmittel (21, 22) zu entsperren.

11. Ventil nach einem der vorhergehenden Ansprüche, wobei die zweiten Sperrmittel (27) wenigstens eine einziehbare Zuhaltung umfassen, welche in einer derartigen Position eingerichtet ist, dass ein Herausziehen des inneren Körpers (19) aus dem äußeren Körper (18) verhindert wird, wenn ein Schlüssel nicht in das Schloss (17) eingeführt ist, wobei die einziehbare Zuhaltung in einer nicht beschränkten Position eingerichtet ist, in welcher die wenigstens eine einziehbare Zuhaltung ein Herausziehen des inneren Körpers (19) aus dem äußeren Körper (19) nicht verhindert, wenn der Betreiberschlüssel (200) eingeführt ist oder wenn ein Administratorschlüssel eingeführt ist.

12. Ventil nach einem der vorhergehenden Ansprüche, wobei die zweiten Sperrmittel (27) wenigstens eine bewegliche Zuhaltung umfassen, welche wenigstens in einer ersten Betriebsposition, in welcher sie eine Bewegung zwischen der offenen Position und der geschlossenen Position des Verschlussorgans (5) ermöglicht, und wenigstens einer zweiten Betriebsposition konfigurierbar ist, in welcher sie mit dem Verschluss in der geschlossenen Position eine Bewegung des Befehlsknopfes (10) nicht ermöglicht, wobei insbesondere die wenigstens eine bewegliche Zuhaltung mittels des Betreiberschlüssels (200) oder mittels eines Administratorschlüssels von der ersten Position in die zweite Betriebsposition verstellbar ist und/oder umgekehrt.

13. Ventil nach den Ansprüchen 11 und 12, wobei die wenigstens eine einziehbare Zuhaltung, welche zum Verhindern eines Herausziehens des inneren Körpers (19) aus dem äußeren Körper (18) eingerichtet ist, und die wenigstens eine bewegliche Zuhaltung eine gleiche Zuhaltung sind.

14. Ventil nach den Ansprüchen 11 und 12, wobei die wenigstens eine einziehbare Zuhaltung und die wenigstens eine bewegliche Zuhaltung der Sperrmittel nicht eine gleiche Zuhaltung sind.

## Revendications

1. Soupape d'entraînement possédant un mécanisme de verrouillage à clé, comprenant :
un corps de soupape (2) définissant un conduit de passage pour un liquide;
un organe obturateur (5) disposé au plan interne du conduit et mobile de manière à pouvoir tourner entre une position ouverte de celui-ci dans laquelle elle permet un écoulement du liquide dans le conduit et une position fermée de celui-ci, qui tourne par rapport à la position ouverte, dans laquelle elle interrompt l'écoulement du liquide dans le conduit;
un bouton de commande (10) possédant une activation manuelle, associé de manière à pouvoir tourner au corps de soupape (2) et agissant sur l'organe obturateur (5) afin de commuter l'organe d'actionnement entre la position ouverte et la position fermée;
une serrure à clé (17), montée sur le bouton (10) et équipée de premiers moyens de blocage (21, 22) agissant sur le bouton (10) afin de bloquer la rotation du bouton (10) par rapport au corps de soupape (2) dans au moins une position correspondant à une position des positions ouverte et fermée de l'organe obturateur (5), les premiers moyens de blocage (21, 22) pouvant être relâchés par activation d'une première clé (100) insérée dans le verrou (17); le verrou (17) faisant preuve d'un corps externe (18) qui est inséré de manière stable dans le bouton (10) et d'un corps interne (19) qui est inséré dans le corps externe (18) et qui présente une fente (20) pour l'insertion d'une clé (100, 200), le corps interne (19) faisant preuve de seconds moyens de blocage (27) agissant entre le corps externe (18) et le corps interne (19) du verrou (17) pour retenir de manière stable le corps interne (19) dans le corps externe (18),
**caractérisée en ce que** les seconds moyens de blocage (27) peuvent être relâchés par activation d'une seconde clé (200), différente de la première clé (100), laquelle seconde clé (200) est insérée dans la fente (20) afin de permettre l'extraction du corps interne (19) du corps externe (18).

2. Soupape selon la revendication 1, dans laquelle le verrou (17) est un verrou à tambour et dans laquelle au moins un tambour des tambours (27) du verrou (17) définit les seconds moyens de blocage (27).

3. Soupape selon la revendication 1 ou 2, dans laquelle le corps interne (19) du verrou (17) est logé de manière à pouvoir tourner dans le corps externe (18) au moins entre une première position stable dans laquelle il permet la manoeuvre des premiers moyens de blocage (21, 22) à l'aide de la première clé (100), et une seconde position dans laquelle la manoeuvre des premiers moyens de blocage (21, 22) est empêchée, les seconds moyens de blocage (27) étant destinés à maintenir de manière stable le corps interne (19) du verrou (17) dans la première et la seconde positions, en particulier avec la clé extraite.

4. Soupape selon l'une quelconque des revendications précédentes, dans laquelle la soupape (1) comprend un élément formant support (9) appliqué au corps de soupape (2) et solide de manière à pouvoir tourner par rapport au corps de soupape (2), et où les premiers moyens de blocage (21, 22) comprennent un boulon rétractable (21) agissant entre le bouton (10) et l'élément formant support (9) et commandé au moins par la première clé (100) insérée dans le verrou (17) afin de bloquer et de libérer la rotation du bouton (10) autour de son axe de rotation (X).

5. Soupape selon la revendication 4, dans laquelle les premiers moyens de blocage (21, 22) comprennent en outre un élément de contraste (22) agissant sur le boulon (21) afin de maintenir le boulon (21) dans une position partiellement extraite du bouton (10) afin d'intercepter l'élément formant support (9) et de bloquer la rotation du bouton (10), et où le boulon (21) fait preuve d'une partie de mise en prise (24) destinée à interagir avec une extrémité en forme de biseau de la première clé (100) insérée dans le verrou (17) afin de recevoir une poussée qui est opposée à une action de poussée des moyens de contraste (22) suite à l'insertion d'au moins la première clé (100) dans le verrou (17).

6. Soupape selon les revendications 3 à 5, dans laquelle lorsque le corps interne (19) du verrou (17) se trouve dans la seconde position, le boulon (21) et le corps interne (19) du verrou (17) se trouvent en configuration réciproque afin d'empêcher l'interaction entre la partie d'extrémité en forme de biseau de la première clé (100) insérée dans le verrou (17) et la partie de mise en prise (24) du boulon (21), afin d'exercer une poussée sur le boulon (21) laquelle poussée oppose l'action de poussée des moyens de contraste (22).

7. Soupape selon l'une quelconque des revendications 4 à 6, dans laquelle le bouton (10) fait preuve d'une ouverture traversante (14) dans laquelle le boulon (21) peut coulisser, et où l'élément formant support (9) fait preuve d'au moins une assise (23) pour insérer une partie du boulon (21) afin de bloquer la rotation du bouton (10), la au moins une assise (23) de l'élément formant support (9) étant disposée en une position permettant de bloquer le bouton (10) en une position correspondant à au moins une position des positions ouverte et fermée de l'organe obturateur (5).

8. Soupape selon l'une quelconque des revendications 4 à 7, dans laquelle l'élément formant support (9) comprend un corps creux (9) disposé sur le corps de soupape (2) autour de l'axe de rotation (X) du bouton (10) et bloqué au niveau du corps de soupape (2) en rotation autour de l'axe (X), le corps creux (9) faisant preuve d'une première extrémité qui est fixée par clé sur une partie de réception (8) du corps de soupape (2) et d'une seconde extrémité qui est localisée dans une position de repos contre une partie du bouton (10) afin que le bouton (10) maintienne le corps creux (9) serré contre le corps de soupape (2).

9. Soupape selon l'une quelconque des revendications précédentes, comprenant en outre une tige de raccordement (7) interposée entre le bouton (10) et l'organe obturateur (5) et solide de manière à pouvoir tourner avec le bouton (10) et l'organe obturateur (5) afin de donner à l'organe obturateur (5) un mouvement de rotation entre les positions ouverte et fermée suite à une manoeuvre du bouton (10), et des moyens de serrage (16) agissant entre la tige de raccordement (7) et le bouton (10) pour maintenir le bouton (10) couplé de manière stable à la tige de raccordement (7), les moyens de serrage (16) comprenant en particulier un élément fileté (16) vissé sur une partie terminale filetée de la tige de raccordement (7) et destiné à maintenir le bouton (10) pressé contre le corps de soupape (2).

10. Soupape selon l'une quelconque des revendications précédentes, dans laquelle le verrou (17) peut être activé par une clé d'utilisateur (100) activée pour débloquer les premiers moyens de blocage (21, 22) mais non activée pour débloquer les seconds moyens de blocage (27), et par une clé d'opérateur (200) activée pour débloquer les premiers et les seconds moyens de blocage (21, 22; 27) et activée pour bloquer les seconds moyens de blocage (27) en une configuration empêchant la clé d'utilisateur (100) de débloquer les premiers moyens de blocage (21, 22).

11. Soupape selon l'une quelconque des revendications précédentes, dans laquelle les seconds moyens de blocage (27) comprennent au moins un tambour rétractable configuré en une position permettant d'empêcher une extraction du corps interne (19) depuis le corps externe (18) lorsqu'une clé n'est pas insérée dans le verrou (17), le tambour rétractable étant configuré en une position non contrainte dans laquelle le au moins un tambour rétractable n'empêche pas l'extraction du corps interne (19) du corps externe (19) lorsque la clé d'opérateur (200) est insérée, ou lorsqu'une clé d'administrateur est insérée.

12. Soupape selon l'une quelconque des revendications précédentes, dans laquelle les seconds moyens de blocage (27) comprennent au moins un tambour mobile qui est configurable au moins en une première position de fonctionnement dans laquelle elle permet un mouvement entre la position ouverte et la position fermée de l'organe obturateur (5), et au moins une seconde position de fonctionnement dans laquelle elle ne permet pas le mouvement du bouton de commande (10) avec l'obturateur dans la position fermée, en particulier le au moins un tambour mobile pouvant être déplacé de la première position vers la seconde position de fonctionnement et/ou vice versa, à l'aide de la clé d'opérateur (200) ou à l'aide d'une clé d'administrateur.

13. Soupape selon les revendications 11 et 12, dans laquelle le au moins un tambour rétractable configuré pour empêcher l'extraction du corps interne (19) du corps externe (18) et le au moins un tambour mobile sont le même tambour.

14. Soupape selon les revendications 11 et 12, dans laquelle le au moins un tambour rétractable et le au moins un tambour mobile des moyens de blocage ne sont pas le même tambour.
